# FASCICULE DE BREVET EUROPEEN

(11) **EP 0 610 111 B1**
(45) Date de publication et mention de la délivrance du brevet: **04.06.1997**
(21) Numéro de dépôt: 94400120.5
(22) Date de dépôt: 20.01.1994
(51) Int. Cl.: F16K 1/44

(54) **Clapet de distribution de fluide**
Flüssigkeitsverteiler Ventil
Fluid distribution valve

(30) Priorité: 20.01.1993 FR 9300509
(43) Date de publication de la demande: 10.08.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Heyden, Eddy Fernand Maurice Ghislain, F-77300 Fontainebleau (FR); Lacour, Christian, F-92170 Vanves (FR); Lechevalier, Michel Marie André Albert, F-77720 Bombon (FR); Riou, Christophe Nicolas, F-77176 Savigny Le Temple (FR)

(56) Documents cités:
- EP-A- 0 098 914
- DE-A- 2 159 110

## Description

Est déjà connu un clapet de distribution de fluide interposé entre une première et une deuxième enceinte, destiné à réaliser sélectivement la mise en communication mutuelle et l'isolement des deux enceintes, et, comportant un corps de clapet et un obturateur mobile guidé en translation dans le corps de clapet suivant un axe de coulissement, le corps de clapet comprenant un passage reliant les première et deuxième enceintes et débouchant dans la deuxième enceinte par une ouverture délimitée par une arête, et, l'obturateur étant muni d'une face d'étanchéité susceptible d'être mise en appui étanche sur ladite arête.

Selon l'art antérieur, l'obturateur est réalisé en un matériau de grande dureté, tel que l'acier, le corps de clapet étant par contre réalisé en un matériau moins dur, tel qu'un alliage léger. La face d'étanchéité de l'obturateur, généralement tronconique, est conçue pour être appliquée sur l'arête du corps de clapet, qui est une arête vive, sans bavure, de sorte que d'éventuels corps étrangers, coincés entre l'arête de l'obturateur, peuvent être coupés afin que soit assurée l'étanchéité. On constate cependant que lors de basculements non souhaités, mais inévitables, de l'obturateur à l'intérieur du dispositif qui le guide, l'étanchéité obtenue est mauvaise. Ceci est dû au fait que deux fonctions sont réalisées par l'arête vive précitée: d'une part, cette arête permet de couper les corps étrangers indésirables, d'autre part, l'étanchéité est réalisée à son niveau.

EP-A-0 098 914 améliore cet état de choses en séparant les moyens prévus pour réaliser les deux fonctions précitées.

Dans ce cas, le clapet de distribution de fluide précédemment défini comporte les dispositions suivantes: le corps de clapet comporte en outre une face annulaire sphérique d'axe de révolution parallèle à l'axe de coulissement et disposée à l'intérieur de la deuxième enceinte, et, l'obturateur comprend, d'une part, un obturateur primaire, qui comprend ladite face d'étanchéité susceptible d'être mise en appui étanche sur ladite arête, d'autre part, un obturateur secondaire qui comprend un segment annulaire sphérique, qui est attelé avec élasticité à l'obturateur primaire, et, qui est susceptible d'être mis en appui étanche sur ladite face annulaire sphérique du corps de clapet.

Selon l'invention, A) ladite face annulaire de corps de clapet est sphérique; B) ledit segment annulaire d'obturateur secondaire est sphérique; et C) l'obturateur primaire présente une périphérie cylindrique, dans laquelle débouchent des rainures ménagées dans l'obturateur primaire et s'étendant entre un collet cylindrique plein et ladite face d'étanchéité de l'obturateur primaire; D) le corps de clapet comprend un alésage, à l'intérieur duquel ladite périphérie cylindrique et ledit collet cylindrique de l'obturateur primaire sont montés coulissants; E) les obturateurs primaire et secondaire comportent des faces transversales disposées mutuellement en regard et formant butées de limitation du débattement axial relatif desdits obturateurs primaire et secondaire; F) le clapet possède une configuration d'obturation, dans laquelle, d'une part, la face d'étanchéité de l'obturateur primaire est en appui étanche sur l'arête du corps de clapet, d'autre part, le segment annulaire sphérique de l'obturateur secondaire est en appui étanche sur la face annulaire sphérique du corps de clapet, cependant que, lorsque cette configuration d'obturation est réalisée, le collet cylindrique est introduit dans l'alésage du corps de clapet d'une profondeur qui est supérieure à la distance séparant lesdites butées de limitation du débattement axial relatif des obturateurs primaire et secondaire.

Les avantageuses dispositions suivantes sont en outre de préférence adoptées:
- l'obturateur primaire présente un alésage, à l'intérieur duquel un manchon cylindrique solidaire de l'obturateur secondaire est introduit, un joint d'étanchéité étant disposé entre ledit alésage et ledit manchon cylindrique;
- l'obturateur secondaire comporte un évidement délimité par un fond, cependant qu'une vis, comprenant une tige filetée et une tête de vis, a sa tige filetée qui traverse avec jeu ledit fond de l'évidement de l'obturateur secondaire et qui est vissée dans l'obturateur primaire, et qu'un organe de rappel élastique est interposé entre le fond de l'évidement et la tête de vis, cette dernière étant disposée dans l'évidement avec un jeu radial entre elle-même et la paroi dudit évidement.

L'avantage principal réside dans le fait que la partie du clapet, qui coupe les corps étrangers indésirables, assure déjà une étanchéité entre corps et obturateur du clapet. Mais sa fonction étanchéité est par ailleurs doublée entre la face et le segment annulaires sphériques, ce qui donne l'assurance d'obtenir une étanchéité réelle. De plus. le guidage même de l'obturateur primaire est amélioré, ce qui réduit les risques de basculement connus antérieurement et est de nature à améliorer l'étanchéité obtenue entre l'obturateur primaire et le corps du clapet.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:

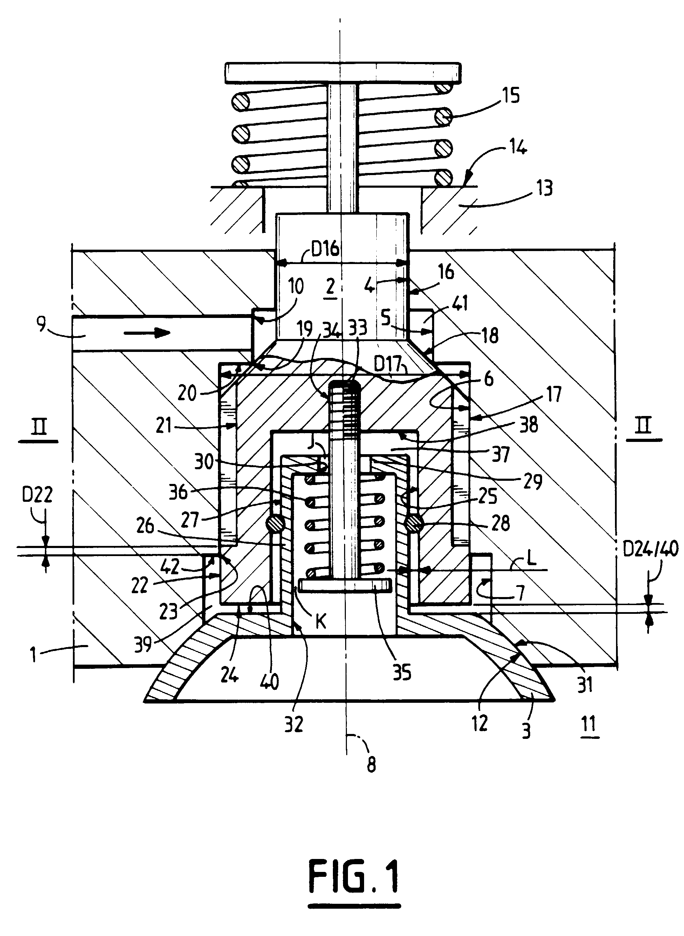

- la figure 1 est une coupe axiale d'un clapet conforme à l'invention; et,

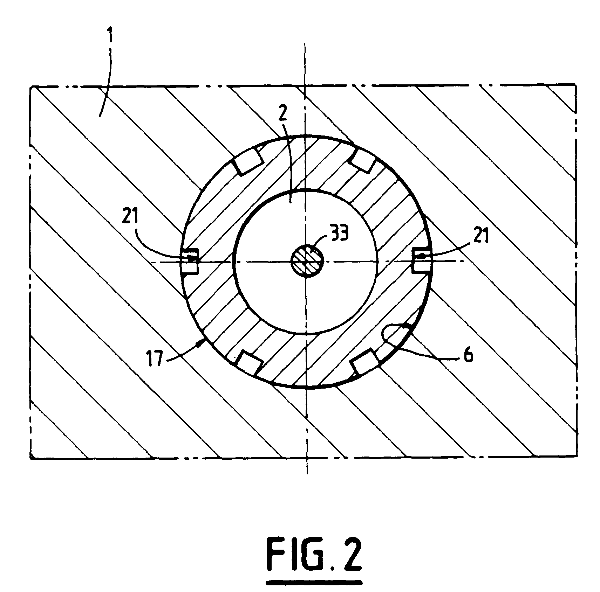

- la figure 2 est une section suivant II-II de la figure 1.

Le clapet de distribution de fluide représenté sur les figures comporte:
- un corps de clapet 1;
- un obturateur primaire 2;
- un obturateur secondaire 3;
- des alésages coaxiaux successifs 4, 5, 6 et 7, cylindriques, d'axe 8, ménagés dans le corps de clapet 1;
- une première enceinte 9, qui débouche par un orifice 10 dans l'alésage 5;
- une deuxième enceinte 11, séparée de l'alésage 7 de la première enceinte 9 par les alésages 5, 6 et 7, et par une face annulaire sphérique 12, ménagée dans le corps de clapet 1, d'axe 8; et,
- un élément 13, solidaire du corps de clapet 1, pouvant en variante en faire partie, et présentant une face d'appui 14 pour un ressort 15, attelé entre l'obturateur primaire 2 et ledit élément 13.

L'obturateur primaire 2 comporte:
- une première face cylindrique 16, qui est montée à coulissement d'axe 8 en regard de, et par rapport à l'alésage 4, l'axe 8 constituant donc l'axe de coulissement de l'obturateur primaire 2 par rapport au corps 1;
- une périphérie cylindrique 17, coaxiale à la première face cylindrique 16, d'axe 8, de diamètre D17 supérieur au diamètre D16 de la face 16, montée coulissante à l'intérieur de, et par rapport à l'alésage 6;
- une face tronconique 18, d'axe 8, qui, interposée entre la première face cylindrique 16 et la périphérie cylindrique 17, réalise le raccordement de l'une à l'autre, susceptible d'être mise en appui sur une arête vive 19 d'intersection de l'alésage 10 avec un épaulement transversal 20 reliant les alésages 5 et 6;
- des rainures 21, ménagées dans l'obturateur primaire 2, débouchant dans la périphérie cylindrique 17, et s'étendant entre un collet cylindrique plein 22, qui, lorsque la face tronconique 18 est en appui étanche sur l'arête vive 19, chevauche l'arête transversale circulaire 23, d'intersection d'un épaulement transversal 41 reliant les alésages 6 et 7, d'une profondeur D22 toujours positive, et, la face tronconique 18 dans laquelle débouchent lesdites rainures 21;
- une face transversale 24, perpendiculaire à l'axe 8, dont est muni l'obturateur primaire 2, située à l'opposé de la première face cylindrique 16, et dans laquelle débouche un alésage 25, interne audit obturateur primaire 2.

L'obturateur secondaire 3 comporte un manchon 26, introduit dans l'alésage 25 de l'obturateur primaire présentant une face cylindrique externe 27, disposée en regard de l'alésage 25, un joint d'étanchéité 28 étant disposé entre l'alésage 25 et la face externe 27 du manchon, celui-ci comprenant, à l'une de ses extrémités, une paroi transversale 29 munie d'un trou traversant 30, et, à l'autre extrémité, un segment annulaire 31, d'axe 8, de même rayon que la face annulaire sphérique 12 du corps de clapet 2, et susceptible d'être en appui étanche (et du type "à rotule") sur ladite face 12, un évidement 32 s'étendant de la paroi transversale 29 pour déboucher dans la deuxième enceinte 11.

Une vis, partiellement contenue dans l'évidement 32, a une tige 33, qui traverse le trou 30 et est vissée dans un taraudage 34 que comporte l'obturateur primaire 2, et a une tête de vis 35, un ressort 36 étant interposé entre la paroi transversale 29 et la tête de vis 35 et tendant à enfoncer le manchon 26 à l'intérieur de l'alésage 25, et, par ce moyen, à mettre en appui étanche le segment annulaire sphérique 31 sur la face annulaire sphérique 12.

Il convient de noter que:
- le volume 37, compris entre la paroi transversale 29 et le fond 38 délimitant l'alésage 25, communique librement avec la deuxième enceinte 11, la tige 33 de la vis traversant avec un jeu J le trou 30, et, la tête 35 de la vis étant contenue, également avec un jeu K, dans l'évidement 32;
- le volume 39 compris entre l'alésage 7 et la face externe 27 du manchon, entre le joint d'étanchéité 28 et le collet cylindrique 22, communique lorsque la face tronconique 18 est hors d'appui de l'arête 19 et que le segment annulaire sphérique 31 est hors d'appui de la face annulaire sphérique 12, d'une part, avec la deuxième enceinte 11, d'autre part, par l'intermédiaire des rainures 21, avec la première enceinte 9;
- le ressort 15, attelé entre l'obturateur primaire 2 et l'élément 13, a pour effet de tendre à mettre en appui la face tronconique 18 sur l'arête vive 19, avec étanchéité;
- l'obturateur secondaire 3 possède une face plane transversale 40, perpendiculaire à l'axe 8, disposée en regard de la face transversale 24 de l'obturateur primaire, et qui, lors des appuis concomitants de la face tronconique 18 sur l'arête 19, et, du segment annulaire sphérique 31 sur la face annulaire sphérique 12, est écartée de ladite face 24 d'une distance D24/40, qui est inférieure à la profondeur D22 de chevauchement de l'alésage 6 par le collet 22;
- il est possible, par convention, de dire que l'épaulement 20 et son arête 19 séparent la première enceinte 9 de la deuxième enceinte 11, la chambre 41, délimitée par l'alésage 5, dans laquelle débouche l'orifice 10, constituant un passage reliant les première 9 et deuxième 11 enceintes;
- le clapet est éventuellement muni d'un dispositif complémentaire de commande de son ouverture, non représenté sur les figures, qui correspondent à la configuration d'obturation du clapet.

Dans cette configuration, une première étanchéité est obtenue par l'appui de la face tronconique 18 sur l'arête vive 19. Cet appui agit également pour couper les particules de pollution, qui se trouveraient coincées entre lesdites face tronconique et arête.

Une deuxième étanchéité est réalisée par l'appui rotulant du segment annulaire sphérique 31 sur la face annulaire sphérique 12. La liaison élastique, par l'intermédiaire du ressort 36, de l'obturateur secondaire 3 avec l'obturateur primaire 2, et un jeu L, entre la face cylindrique 27 et l'alésage 25, permettant un libre pivotement de l'obturateur secondaire 12 par rapport à l'obturateur primaire 2, et l'indépendance entre les première et deuxième étanchéités précitées. Ainsi, dans le cas où une particule indésirable serait coincée entre l'arête 19 et la face tronconique 18, la deuxième étanchéité, entre le segment annulaire sphérique 31 et la face annulaire sphérique 12, serait malgré tout réalisée.

Enfin, le joint d'étanchéité 28 évite l'écoulement d'un débit incontrôlé entre les volumes 39 et 37, et, à travers les jeux J et K, entre le volume 39 et la deuxième enceinte 11, dans la configuration d'obturation entre les segment 31 et face 12 annulaires sphériques. Mais pour ce faire, il est nécessaire que D22 soit supérieur à D24/40. Il faut en effet que les faces 24, 40 viennent en appui de butée avant que les rainures 21 ne débouchent dans le volume 39, puis dans la deuxième enceinte 11, ceci afin que le débit de fluide soit correctement dosé.

Bien entendu, dans sa configuration d'ouverture, dans laquelle la face tronconique 18 et le segment annulaire sphérique 31 sont hors d'appui de l'arête 19 et de la face annulaire sphérique 12, respectivement, l'obturateur coulisse dans son ensemble (obturateur primaire 2 et obturateur secondaire 3) parallèlement à l'axe 8.

L'avantage du clapet décrit réside à la fois dans la redondance des étanchéités réalisées, condition de l'obtention d'une étanchéité globale parfaite, et dans l'indépendance des étanchéités les unes par rapport aux autres.

Le clapet peut notamment être utilisé dans les circuits de distribution de carburant aux injecteurs d'un turbomoteur.

## Revendications

1. Clapet de distribution de fluide interposé entre une première (9) et une deuxième (11) enceinte, destiné à réaliser sélectivement la mise en communication mutuelle et l'isolement des deux enceintes, et, comportant un corps de clapet (1) et un obturateur mobile (2) guidé en translation (4-16) dans le corps de clapet suivant un axe de coulissement (8), le corps de clapet comprenant un passage reliant les première et deuxième enceintes et débouchant dans la deuxième enceinte par une ouverture délimitée par une arête (19), et, l'obturateur étant muni d'une face d'étanchéité (18) ayant une forme tronconique, d'axe (8) parallèle à l'axe de coulissement (8) et susceptible d'être mise en appui étanche sur ladite arête (19);
dans lequel
le corps de clapet (2) comporte en outre une face annulaire (12) d'axe de révolution (8) parallèle à l'axe de coulissement (8) et disposée à l'intérieur de la deuxième enceinte (11), et,
l'obturateur comprend, d'une part, un obturateur primaire (2), qui comprend ladite face d'étanchéité (18) susceptible d'être mise en appui étanche sur ladite arête (19), d'autre part, un obturateur secondaire (3) qui comprend un segment annulaire (31), qui est attelé (33-35) avec élasticité (36) à l'obturateur primaire (2), et, qui est susceptible d'être mis en appui étanche sur ladite face annulaire (12) du corps de clapet, caractérisé en ce que
A) ladite face annulaire (12) de corps de clapet (2) est sphérique;
B) ledit segment annulaire (31) d'obturateur secondaire (3) est sphérique;
C) l'obturateur primaire (2) présente une périphérie cylindrique (17), dans laquelle débouchent des rainures (21) ménagées dans l'obturateur primaire et s'étendant entre un collet cylindrique plein (22) et ladite face d'étanchéité (18) de l'obturateur primaire (2);
D) le corps de clapet (1) comprend un alésage (6), à l'intérieur duquel ladite périphérie cylindrique (17) et ledit collet cylindrique (22) de l'obturateur primaire (2) sont montés coulissants;
E) les obturateurs primaire (2) et secondaire (3) comportent des faces transversales (24-40) disposées mutuellement en regard et formant butées de limitation du débattement axial relatif desdits obturateurs primaire et secondaire; et,
F) le clapet possède une configuration d'obturation, dans laquelle, d'une part, la face d'étanchéité (18) de l'obturateur primaire (2) est en appui étanche sur l'arête (19) du corps de clapet (1), d'autre part, le segment annulaire sphérique (31) de l'obturateur secondaire (3) est en appui étanche sur la face annulaire sphérique (12) du corps de clapet (1), cependant que, lorsque cette configuration d'obturation est réalisée, le collet cylindrique (22) est introduit dans l'alésage (6) du corps de clapet d'une profondeur (D22) qui est supérieure à la distance (D24/40) séparant lesdites butées (24-40) de limitation du débattement axial relatif des obturateurs primaire (2) et secondaire (3).

2. Clapet selon la revendication 1,
caractérisé en ce que l'obturateur primaire (2) présente un alésage (25), à l'intérieur duquel un manchon cylindrique (26) solidaire de l'obturateur secondaire (3) est introduit, un joint d'étanchéité (28) étant disposé entre ledit alésage (25) et ledit manchon cylindrique (26).

3. Clapet selon la revendication 2,
caractérisé en ce que l'obturateur secondaire (3) comporte un évidement (32) délimité par un fond (29), cependant qu'une vis (33-35), comprenant une tige filetée (33) et une tête de vis (35), a sa tige filetée (33) qui traverse avec jeu (J) ledit fond (29) de l'évidement (32) de l'obturateur secondaire (3) et qui est vissée (34) dans l'obturateur primaire (2), et qu'un organe de rappel élastique (36) est interposé entre le fond (29) de l'évidement et la tête de vis (35), cette dernière étant disposée dans l'évidement (32) avec un jeu radial (K) entre elle-même et la paroi dudit évidement.

## Patentansprüche

1. Flüssigkeitsverteilerventil zwischen einem ersten (9) und einem zweiten (11) Raum, das dazu vorgesehen ist, abwechselnd die Verbindung und die Trennung zwischen den zwei Räumen herzustellen, und das aus einem Ventilkörper (1) und einem beweglichen Verschluß (2) besteht, der in dem Ventilkörper entlang einer Gleitachse (8) in einer Translationsbewegung geführt (4-16) wird, wobei der Ventilkörper einen Durchlaß aufweist, der den ersten und den zweiten Raum miteinander verbindet und mit einer Öffnung, die durch einen Rand (19) umgrenzt wird, in dem zweiten Raum mündet, und wobei der Verschluß mit einer kegelstumpfförmigen Dichtfläche (18) versehen ist, deren Achse (8) parallel zur Gleitachse (8) verläuft, und die in dichte Anlage an den genannten Rand (19) gebracht werden kann, wobei der Ventilkörper (2) ferner eine ringförmige Fläche (12) aufweist, deren Drehachse (8) parallel zur Gleitachse (8) verläuft, und die innerhalb des zweiten Raums (11) angeordnet ist, und wobei der Verschluß einerseits aus einem ersten Verschlußabschnitt (2) besteht, der die genannte Dichtfläche (18) umfaßt, die in dichte Anlage an den genannten Rand (19) gebracht werden kann, und andererseits aus einem zweiten Verschlußabschnitt (3) besteht, der ein ringförmiges Segment (31) umfaßt, das mit Federwirkung (36) an dem ersten Verschlußabschnitt (2) angehängt ist (33-35), und der in dichte Anlage an der genannten ringförmigen Fläche (12) des Ventilkörpers gebracht werden kann,
dadurch gekennzeichnet, daß
A) die genannte ringförmige Fläche (12) des Ventilkörpers (2) kugelförmig ist,
B) das genannte Ringsegment (31) des zweiten Verschlußabschnitts (3) kugelförmig ist,
C) der erste Verschlußabschnitt (2) einen zylinderförmigen Umfang (17) aufweist, in den Nuten (21) münden,die in dem ersten Verschlußabschnitt ausgeführt sind und zwischen einem vollen, zylinderförmigen Bund (22) und der genannten Dichtfläche (18) des ersten Verschlußabschnitts (2) verlaufen,
D) der Ventilkörper (1) eine Bohrung (6) aufweist, in der der genannte zylinderförmige Umfang (17) und der genannte zylinderförmige Bund (22) des ersten Verschlußabschnitts (2) gleitend eingesetzt sind,
E) der erste Verschlußabschnitt (2) und der zweite Verschlußabschnitt (3) quer verlaufende Flächen (24-40) aufweisen, die einander gegenüberliegend angeordnet sind und Anschläge zur Begrenzung des axialen Ausschlags des genannten ersten Verschlußabschnitts und zweiten Verschlußabschnitts zueinander aufweisen, und
F) das Ventil eine Schließkonfiguration hat, bei der einerseits die Dichtfläche (18) des ersten Verschlußabschnitts (2) sich in dichter Anlage an dem Rand (19) des Ventilkörpers (1) befindet und andererseits das kugelförmige Ringsegment (31) des zweiten Verschlußabschnitts (3) sich in dichter Anlage an der kugelförmigen Ringfläche (12) des Ventilkörpers (1) befindet, während bei dieser Schließkonfiguration der zylinderförmige Bund (22) mit einer Tiefe (D22) in die Bohrung (6) des Ventilkörpers eingeführt ist, die größer ist als der Abstand (D24/40) zwischen den beiden Anschlägen (24-40) zur Begrenzung des axialen Ausschlags des ersten Verschlußabschnitts (2) und zweiten Verschlußabschnitts (3) zueinander.

2. Ventil nach Anspruch 1,
dadurch gekennzeichnet, daß der erste Verschlußabschnitt (2) eine Bohrung (25) aufweist, in die eine zylinderförmige Muffe (26) eingesetzt wird, die mit dem zweiten Verschlußabschnitt (3) fest verbunden ist, wobei eine Dichtung (28) zwischen der genannten Bohrung (25) und der genannten zylinderförmigen Muffe (26) angeordnet ist.

3. Ventil nach Anspruch 2,
dadurch gekennzeichnet, daß der zweite Verschlußabschnitt (3) einen Hohlraum (32) aufweist, der von einem Boden (29) abgegrenzt wird, während eine Schraube (33-35), die aus einem Gewindeschaft (33) und einem Schraubenkopf (35) besteht, mit ihrem Gewindeschaft (33) mit einem Spiel (J) durch den genannten Boden (29) des Hohlraums (32) des zweiten Verschlußabschnitts (3) hindurch verläuft und in dem ersten Verschlußabschnitt (2) verschraubt ist, und daß ein federndes Rückstellorgan (36) zwischen dem Boden (29) des Hohlraums und dem Schraubenkopf (35) angeordnet ist, wobei letzterer in dem Hohlraum (32) mit einem radialen Spiel (K) zwischen sich und der Wand des genannten Hohlraums angeordnet ist.

## Claims

1. Fluid distribution valve interposed between a first chamber (9) and a second chamber (11), the valve being intended to place the two chambers in communication with each other and to isolate them from each other selectively, and including a valve body (1) and a moving shutter (2) guided in translation (4-16) in the valve body along an axis of sliding (8), the valve body comprising a passage linking the first and second chambers and emerging in the second chamber via an opening delimited by an edge (19), and the shutter having a sealing face (18) with a frustoconical shape, of axis (8) parallel to the axis of sliding (8) and capable of being brought to bear in sealed manner against the said edge (19);
in which:
the valve body (1) further includes an annular face (12) of axis of revolution (8) parallel to the axis of sliding (8) and which face is arranged inside the second chamber (11), and
the shutter comprises, on the one hand, a primary shutter (2) which comprises the said sealing face (18) capable of being brought to bear in a sealed manner against the said edge (19) and, on the other hand, a secondary shutter (3) which comprises an annular segment (31) which is coupled (33-35) elastically (36) to the primary shutter (2) and which is capable of being brought to bear in a sealed manner against the said annular face (12) of the valve body, characterized in that
A) the said annular face (12) of the valve body (2) is spherical;
B) the said annular segment (31) of the secondary shutter (3) is spherical;
C) the primary shutter (2) has a cylindrical periphery (17) in which there emerge grooves (21) made in the primary shutter and extending between a solid cylindrical collar (22) and the said sealing face (18) of the primary shutter (2);
D) the valve body (1) comprises a bore (6) inside which the said cylindrical periphery (17) and the said cylindrical collar (22) of the primary shutter (2) are mounted in such a way that they can slide;
E) the primary shutter (2) and secondary shutter (3) have transverse faces (24-40) arranged facing each other and forming stops for limiting the relative axial travel of the said primary and secondary shutters; and
F) the valve has a shut-off configuration in which, on the one hand, the sealing face (18) of the primary shutter (2) bears in a sealed manner against the edge (19) of the valve body (1) and, on the other hand, the spherical annular segment (31) of the secondary shutter (3) bears in a sealed manner against the spherical annular face (12) of the valve body (1), while when this shut-off configuration is achieved, the cylindrical collar (22) enters the bore (6) of the valve body by a depth (D22) which is greater than the distance (D24/40) separating the said stops (24-40) which limit the relative axial travel of the primary shutter (2) and secondary shutter (3).

2. Valve according to Claim 1, characterized in that the primary shutter (2) has a bore (25) inside which a cylindrical sleeve (26) integral with the secondary shutter (3) is inserted, a seal (28) being arranged between the said bore (25) and the said cylindrical sleeve (26).

3. Valve according to Claim 2, characterized in that the secondary shutter (3) has a recess (32) delimited by a bottom (29) while a screw (33-35), comprising a threaded shank (33) and a screw head (35), has its threaded shank (33) passing with clearance (J) through the said bottom (29) of the recess (32) of the secondary shutter (3) and screwed (34) into the primary shutter (2), and in that an elastic return member (36) is interposed between the bottom (29) of the recess and the screw head (35), the latter being arranged in the recess (32) with radial clearance (K) between itself and the wall of the said recess.
